# EUROPEAN PATENT APPLICATION

(11) **EP 3 683 007 A1**
(43) Date of publication of application: **22.07.2020**
(21) Application number: 17925407.3
(22) Date of filing: 10.11.2017
(51) Int. Cl.: B23P 15/00, B21J 5/00, B21K 1/76

(54) **PROFILED METAL CONSTRUCTION FORMING METHOD**

(30) Priority: 15.09.2017 CN 201710837992
(71) Applicant: China Institute of Atomic Energy, Beijing 102413 (CN)
(72) Inventor: LI, Yaping, Beijing 102413 (CN); XU, Haitao, Beijing 102413 (CN); LIU, Zhaoyang, Beijing 102413 (CN); SUN, Gang, Beijing 102413 (CN); YAN, Chunguang, Beijing 102413 (CN); LIU, Qiang, Beijing 102413 (CN); WANG, Mingzheng, Beijing 102413 (CN); YANG, Hongyi, Beijing 102413 (CN); GAO, Fuhai, Beijing 102413 (CN)
(74) Representative: Global IP Europe Patentanwaltskanzlei
(86) International application number: PCT/CN2017/110492
(87) International publication number: WO 2019/051981

(57) **Abstract**

The invention relates to a special-shaped metal construction forming method. The method comprises the following steps: firstly, preparing prefabricated blanks; then preparing an hourglass-shaped module from the prefabricated blanks; and after heating the hourglass-shaped module, performing upsetting deformation along the height direction and inter-forging heat preservation to forge and weld the prefabricated blank into a blank. By the special-shaped metal construction forming method, the deformation of the upsetting process can be centralized on the interface position of the hourglass-shaped module blank, and generation of the surface tensile stress is avoided, so that the blank is subjected to a large pressure stress uniformly and the surface tensile stress state of the blank is obviously optimized. By the special-shaped metal construction forming method, the metal construction forming yield can be increased and the production efficiency can be greatly improved under the condition of using a press with the same specifications.

## Description

### Technical Field

The invention relates to a billets manufacturing method for metals and alloys, in particular to a special-shaped billet by construction forming method.

### Background

During preparation of a large billet of a metal or a metal composite material, the existing method is shown as follows: taking casting blanks, forging blanks and rolling blanks as elements, packaging a plurality of elements together after performing surface processing and cleaning, and maintaining the internal high-vacuum state; then applying a forging and welding process with the characteristics of upsetting deformation, inter-forging heat preservation and multidirectional forging; and finally preparing a large metal block. As "a homogenous metal construction forming method" in Chinese patent application 201511026272.X, "a metal construction forming method" in 201511027492.4 as well as "a cylinder metal construction forming method" in 201511027686.4, the metals and alloys are manufactured using a one-time construction forming method. In the methods, prefabricated blanks are cuboid-shaped or cylinder-shaped; and in the construction process, weld joints, at the maximum bulging positions (the center positions of the side surfaces of the blanks), of the cuboid-shaped or cylinder-shaped blanks are liable to be cracked. Because the pressure stress of the maximum bulging positions (the center positions of the side surfaces of the blanks) is reduced continuously along with the increment of deformation amount and is finally changed into 0; and the stress of the positions is converted into tensile stress if deformation is conducted continuously. The stress state of the surface is controlled by the bulging degree. The more serious the bulging is, the larger the surface tensile stress is. When the surface tensile stress is more than the strength of the weld joint, the weld joint will be cracked.

In addition, for a metal block with heavier than a hundred of tons or more, one-time construction forming is extremely difficult and the requirements on equipment are high. Once anyone of the weld joints is in failure in the construction process, the whole blank will be scrapped and the loss will be huge.

### Summary

The invention aims to provide a special-shaped metal block construction forming method for the defects in the prior art, so that the surface tensile stress state of the blank in the forging process is improved and the metal construction forming yield is increased.

The technical scheme of the invention is as follows: the special-shaped metal construction forming method comprises the following steps:
(S1) preparing prefabricated blanks;
(S2) preparing an hourglass-shaped module from the prefabricated blanks;
(S3) performing upsetting deformation along the height direction and inter-forging heat preservation after heating the hourglass-shaped module to forge and weld the prefabricated blank into a bigger blank;
(S4) processing the blank into a component or a part.

Further, as the above special-shaped metal construction forming method, the prefabricated blanks in step (S1) are constructed by casting blanks, forging blanks or rolling blanks and are formed through seal welding and forging; or the prefabricated blanks in step (S1) are directly prepared from forging blanks by machining.

Further, as the above special-shaped metal construction forming method, in step (S2), the prefabricated blanks are made into frustum-shaped units, the small surfaces of the two frustum-shaped units are stacked together and vacuum electron beam welding is conducted to prepare the hourglass-shaped module. The frustum-shaped units can be of circular cone frustum shapes or rectangular pyramid frustum shapes, and smooth transition at the intermediate interface position of the two frustum-shaped units should be guaranteed.

Furthermore, the included angle between the lower bottom edge and the waist edge of the longitudinal trapezoid section of each frustum-shaped unit is 60 to 85 degrees.

Further, as the above the special-shaped metal construction forming method, the depth of joints for vacuum electron beam welding is 25 to 40 mm.

Further, as the above special-shaped metal construction forming method, the height-diameter ratio of the hourglass-shaped module in step (S2) is between 1 and 3.

Further, as the above special-shaped metal construction forming method, the height reduction of implementing upsetting deformation on the hourglass-shaped module in step (S3) is equal to 30 to 55 percent.

Further, as the above special-shaped metal construction forming method, the blank after upsetting in step (S3) is subjected to high-temperature diffusion bonding, wherein the heating temperature is not less than 1200 °C and the heat-preservation time after temperature reaching stable is not less than 8 hours.

The invention has the following beneficial effects: according to the special-shaped metal construction forming method provided by the invention, the prefabricated blanks are made into the hourglass-shaped module, the hourglass-shaped construction blank can centralize the deformation in the upsetting process around the interface position, and generation of the surface tensile stress is avoided, so that the blank is subjected to a large pressure stress uniformly and the surface tensile stress state of the blank is obviously optimized. Meanwhile, the minimum section area of the hourglass-shaped blank is small, so pressure needed by forming can be effectively reduced. By adoption of the special-shaped metal construction forming method provided by the invention, the requirements on equipment are low, the weld joints are detectable and the quality of the weld joints can be guaranteed, so that the metal construction forming yield can be increased and the production efficiency can be greatly improved under the condition of using presses with the same specifications.

### Brief Description of Drawings

FIG. 1 is a flow diagram of the invention;
FIG. 2 is schematic diagram of the hourglass-shaped construction blank along a longitudinal trapezoid section in the invention;
FIG. 3 is a schematic diagram of the hourglass-shaped construction blank prepared by the circular cone frustum-shaped units in the embodiment of the invention; and
FIG. 4 is a structure schematic diagram of the rectangular pyramid frustum-shaped units in the embodiment of the invention.

### Description of Embodiments

The invention is described in details below with reference to the accompanying drawings and embodiments.

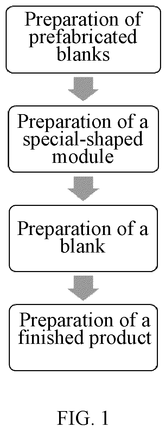

As shown in FIG. 1, in terms of the overall technological process, the special-shaped metal construction forming method provided by the invention comprises: step (1) preparing prefabricated blanks; step (2) preparing a special-shaped module (hourglass-shaped module) from the prefabricated blanks; and step (3) performing upsetting deformation along the height direction and inter-forging heat preservation after heating the special-shaped module to forge and weld the prefabricated blanks into a blank. Further, the method also can comprise a step (4) of processing the blank into a component or a part.

In step (1), the prefabricated blanks can be constructed by casting blanks, forging blanks or rolling blanks and be formed through seal welding and forging (refer to the description of "a homogeneous metal construction forming method" in CN201511026272.X for the method); or the prefabricated blanks are directly prepared from a forging blank by machining.

The key point, different from the prior art, of the invention is as follows: the prefabricated blanks in step (2) are made into the hourglass-shaped module, the hourglass-shaped construction blank can centralize the deformation in the upsetting process on the interface position, and generation of the surface tensile stress is avoided, so that the blank is subjected to big pressure stress uniformly and the surface tensile stress state of the blank is obviously improved.

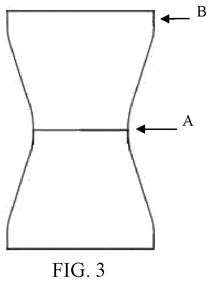

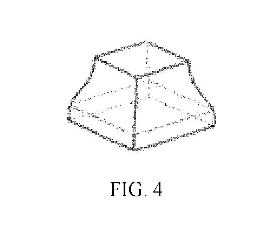

Therefore, the prefabricated blanks are made into the frustum-shaped units firstly, and the frustum-shaped units can be prepared through a forging and/or machining mode. The small surfaces of the two frustum-shaped units are stacked together and vacuum electron beam welding is conducted to prepare the hourglass-shaped module. In the embodiments, the frustum-shaped units can be of circular cone frustum shapes or rectangular pyramid frustum shapes (also can be of other frustum shapes, such as a hexagonal pyramid frustum and an octagonal pyramid frustum). FIG.3 is a schematic diagram of the hourglass-shaped construction blank prepared from the circular cone frustum-shaped units, and FIG.4 is a schematic diagram of the hourglass-shaped construction blank prepared from the rectangular pyramid frustum-shaped units.

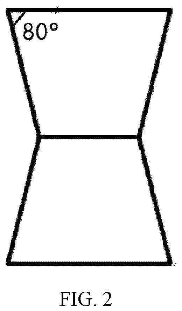

The minimum section area of the hourglass-shaped blank is small, so pressure required for forging can be effectively reduced. However, when the middle sunken position is narrow, fold defects will occur in the forging process; and when the middle sunken position is wide, the effect of reducing the forging pressure will be weakened. Therefore, when the hourglass-shaped blank is designed, the size of the included angle between the lower bottom edge and the waist edge of the longitudinal trapezoid section of each frustum-shaped unit should be considered to make it within a relatively ideal range; and in the design of the invention, the included angle between the lower bottom edge and the waist edge of the longitudinal trapezoid section of each frustum-shaped unit is 60 to 85 degrees (such as 80 degrees), as shown in FIG. 2. Meanwhile, smooth transition of the trapezoidal blank is conducted, so that the fact that the trapezoidal blank is folded at the intermediate interface position is avoided and a sharp corner at the junction of the two trapezoidal blanks is avoided. As shown in FIG. 3, the junction of the two circular cone frustum-shaped units is designed into cambered surface connection, so that a smooth transition surface A is formed and a sharp corner at the junction is avoided. Furthermore, the connection position of the bottom surface and the side surface of each frustum-shaped unit is designed into a column-shaped structure (as shown in B in FIG. 3), so that a sharp corner on the bottom surface is avoided.

The junction of the two frustum-shaped units is realized by a vacuum electron beam welding mode, a to-be-welded surface is processed and cleaned and then the periphery of the to-be-welded blank in a vacuum chamber is subjected to vacuum electron beam seal welding, wherein the depth for vacuum electron beam welding is 25 to 40 mm. The height-diameter ratio of the hourglass-shaped module formed after welding is between 1 and 3. The height-diameter ratio described here refers to the ratio of the total height of the hourglass-shaped module to the diameter of the bottom surface of the circular cone frustum (or the side length of the bottom surface of the rectangular pyramid frustum).

In step (3), the blank is heated firstly, wherein the highest heating temperature is not less than 1250 °C; then the hourglass-shaped blank is subjected to upsetting deformation along the height direction; and the heated blank is placed on a press operating platform and is subjected to upsetting along the height direction, wherein the height reduction of the upsetting deformation is equal to 30 to 50 percent of the total height of the blank. Then, the blank after upsetting is subjected to high-temperature diffusion bonding and the blank after upsetting is sent back to a heating furnace to perform heating, wherein the heating temperature is not less than 1200 °C and the heat preservation time after temperature reaching stable is not less than 8 hours.

The blank can be further forged or processed, so that step (4) of processing the blank into the component or the part is implemented.

The invention is suitable for construction forming of steel materials such as stainless steel, die steel, carbon steel and alloy steel or other metals and alloys.

### Embodiment 1

In the first step, the prefabricated blank is manufactured by cutting a carbon steel rod with the diameter of 800 mm into a cylindrical blank with the length of 2400 mm. The cylindrical blank is subjected to upsetting and forging and is machined into a specified size to form the rectangular pyramid frustum-shaped units as shown in FIG. 4. After a to-be-welded is cleaned, the small surfaces of the two rectangular pyramid frustum-shaped units are stacked to form an hourglass-shaped module blank with the width of 1086 mm, the length of 1086 mm and the thickness of 1450 mm.

In the second step, the periphery of the to-be-welded blank is subjected to vacuum electron beam seal welding in a vacuum chamber, wherein the welding depth is 25 to 40 mm.

In the third step, the blank after seal welding is heated in a heating furnace, wherein the highest heating temperature is not less than 1250 °C.

In the fourth step, the blank is subjected to upsetting deformation along the height direction and inter-forging heat preservation. The heated blank is placed on a press operating platform and is subjected to upsetting operation by taking the height direction of the blank along a vertical direction, wherein the height reduction is equal to 30 to 55 percent of the total height of the blank.

In the fifth step, the blank is subjected to high-temperature diffusion bonding. The blank after upsetting is sent back to the heating furnace to perform heating, wherein the heating temperature is not less than 1200 °C and the heat preservation time after temperature reaching stable is not less than 8 hours.

In the sixth step, the blank is subjected to upsetting and forging in three directions and is formed into a module through chamfering, drawing-down and rounding. The final product is a cylindrical rod module with a diameter of 1000 mm.

### Embodiment 2

In the first step, a continuous casting plate blank is cut into 7 blanks with the specification of 1000 mm^{∗}1000 mm^{∗}200 mm, the 7 blanks are superposed to form a module with the width of 1000 mm, the length of 1000 mm and the thickness of 1400 mm, the peripheries of the 7 blanks are subjected to vacuum electron beam seal welding in a vacuum chamber, and then the blanks are heated and forged and are machined into a specified size to form the rectangular pyramid frustum-shaped units as shown in FIG. 4. The small surfaces of the two rectangular pyramid frustum-shaped units are superposed to form an hourglass-shaped module blank.

In the second step, the periphery of the to-be-welded blank is subjected to vacuum electron beam seal welding in a vacuum chamber, wherein the welding depth is 25 to 40 mm.

In the third step, the blank after seal welding is heated in a heating furnace, wherein the highest heating temperature is not less than 1250 °C.

In the fourth step, the blank is subjected to upsetting deformation along the height direction and inter-forging heat preservation. The heated blank is placed on a press operating platform and is subjected to upsetting operation by taking the height direction of the blank along a vertical direction, wherein the height reduction is equal to 30 to 55 percent of the total height of the blank.

In the fifth step, the blank is subjected to high-temperature diffusion bonding. The blank after upsetting is sent back to the heating furnace to perform heating, wherein the heating temperature is not less than 1200 °C and the heat preservation time after temperature reaching stable is not less than 8 hours.

In the sixth step, the blank is subjected to upsetting and forging in three directions to form the needed forge piece module.

Obviously, those skilled in the art can perform various modifications and variations on the invention without departing from the scope of the invention. Thus, the invention is also intended to include the modifications and variations if the variations and modifications on the invention belong to the range of the claims of the invention as well as the equivalent technologies thereof.

## Claims

1. A special-shaped metal construction forming method comprises the following steps:
(51) preparing prefabricated blanks;
(S2) preparing an hourglass-shaped module from the prefabricated blanks;
(S3) performing upsetting deformation along the height direction and inter-forging heat preservation after heating the hourglass-shaped module to forge and weld the prefabricated blank into a bigger blank.

2. The special-shaped metal construction forming method as claimed in claim 1, wherein it also comprises step (4) processing the blank into a component or a part.

3. The special-shaped metal construction forming method as claimed in claim 1 or 2, wherein the prefabricated blanks in step (S1) are constructed by casting blanks, forging blanks or rolling blanks and are formed through seal welding and forging; or the prefabricated blank in step (S1) are directly prepared from forging blanks by machining.

4. The special-shaped metal construction forming method as claimed in claim 3, wherein in step (S2), the prefabricated blanks are made into frustum-shaped units, the small surfaces of the two frustum-shaped units are stacked together and vacuum electron beam welding is conducted to prepare the hourglass-shaped module.

5. The special-shaped metal construction forming method as claimed in claim 4, wherein the frustum-shaped units can be of circular cone frustum shapes or rectangular pyramid frustum shapes, and smooth transition at the intermediate interface position of the two frustum-shaped units should be guaranteed.

6. The special-shaped metal construction forming method as claimed in claim 5, wherein the included angle between the lower bottom edge and the waist edge of the longitudinal trapezoid section of each frustum-shaped unit is 60 to 85 degrees.

7. The special-shaped metal construction forming method as claimed in claim 4, wherein the depth of joints for vacuum electron beam welding is 25 to 40 mm.

8. The special-shaped metal construction forming method as claimed in claim 1 or 2, wherein the height-diameter ratio of the hourglass-shaped module in step (S2) is between 1 and 3.

9. The special-shaped metal construction forming method as claimed in claim 1 or 2, wherein the height reduction of implementing upsetting deformation on the hourglass-shaped module in step (S3) is equal to 30 to 55 percent.

10. The special-shaped metal construction forming method as claimed in claim 1 or 2, wherein the blank after upsetting in step (S3) is subjected to high-temperature diffusion bonding, wherein the heating temperature is not less than 1200 °C and the heat-preservation time after temperature reaching stable is not less than 8 hours.
